# EUROPÄISCHE PATENTANMELDUNG

(11) **EP 4 306 395 A1**
(43) Veröffentlichungstag der Anmeldung: **17.01.2024**
(21) Anmeldenummer: 23184477.0
(22) Anmeldetag: 10.07.2023
(51) Int. Cl.: B62J 7/04

(54) **GEPÄCKTRÄGER**

(30) Priorität: 12.07.2022 DE 202022001565 U; 24.04.2023 DE 102023110360
(71) Anmelder: AT Zweirad GmbH, 48341 Altenberge (DE)
(72) Erfinder: Thiemann, Volker, 48341 Altenberge (DE)
(74) Vertreter: Weeg, Thomas

(57) **Zusammenfassung**

Die Erfindung betrifft einen Gepäckträger (2) mit einer Gepäckablage (4, 4') zur Aufnahme von Gepäck und mit einem Traggestell (6) zur Verbindung der Gepäckablage (4, 4') mit einem Fahrzeugrahmen. Das Traggestell (6) umfasst einen ersten, lösbar mit einer ersten Gepäckablagenseite (12) verbundenen Seitenrahmen (8) und einen zweiten, lösbar mit einer zweiten Gepäckablagenseite (14) verbundenen Seitenrahmen (10). Der erste Seitenrahmen (8) und der zweite Seitenrahmen (10) sind über die Gepäckablage (4, 4') miteinander verbunden.

## Beschreibung

Die Erfindung betrifft einen Gepäckträger mit einer Gepäckablage zur Aufnahme von Gepäck und mit einem Traggestell zur Verbindung der Gepäckablage mit einem Fahrzeugrahmen. Darüber hinaus betrifft die Erfindung ein Fahrzeug mit einem solchen Gepäckträger.

Derartige Gepäckträger, insbesondere Radgepäckträger, dienen dem Transport von Gepäck, Fahrzeugzubehör oder Ähnlichem. Dazu sind die Gepäckträger an bevorzugt als Zwei- oder Dreirad, besonders bevorzugt als Fahrrad, ausgebildeten Fahrzeugen montierbar. Als Radgepäckträger ausgebildete Gepäckträger sind insbesondere oberhalb eines Rades des Fahrzeuges anzuordnen. Mittels der Gepäckablage wird das Gepäck oder Ähnliches während einer Fahrt des Fahrzeugs sicher gehalten. Zur Abstützung der Gepäckablage an dem Fahrzeug weisen derartige Gepäckträger ein Traggestell auf.

Aus der Praxis sind Gepäckträger mit einer Gepäckablage und einem einstückig mit der Gepäckablage ausgebildeten Traggestell bekannt. Derartige Gepäckträger sind beispielsweise als Schweißkonstruktion ausgeführt. Nachteilig ist daran, dass die Gepäckträger ein vergleichsweise großes Bauteilvolumen mit einem entsprechend großen Packmaß aufweisen, wodurch etwaige Versandkosten erhöht sind. Zudem sind solche Gepäckträger unflexibel hinsichtlich Ihrer Eigenschaften, insbesondere einer Kompatibilität mit verschiedenen Fahrzeugen, und auch hinsichtlich Eigenschaften der Gepäckablage, insbesondere einer Austauschbarkeit, einer Anpassbarkeit und/oder einem Funktionsumfang der Gepäckablage.

Der Erfindung liegt daher die Aufgabe zugrunde, einen Gepäckträger sowie ein Fahrzeug der eingangs genannten Art bereitzustellen, bei dem die vorgenannten Nachteile jeweils zumindest teilweise verringert sind. Bevorzugt soll der Gepäckträger ein geringes Packmaß sowie eine hohe Flexibilität hinsichtlich seiner Eigenschaften, insbesondere einer Kompatibilität mit verschiedenen Fahrzeugen und einer Austauschbarkeit der Gepäckablage, aufweisen.

Die Aufgabe wird durch einen Gepäckträger mit den Merkmalen des Anspruchs 1 gelöst. Weitere vorteilhafte Ausgestaltungen der Erfindung sind den Unteransprüchen 2 bis 15 zu entnehmen. Darüber hinaus wird die Aufgabe durch ein Fahrzeug mit den Merkmalen des Anspruchs 16 gelöst.

Erfindungsgemäß ist vorgesehen, dass das Traggestell einen ersten, lösbar mit einer ersten Gepäckablagenseite verbundenen Seitenrahmen und einen zweiten, lösbar mit einer zweiten Gepäckablagenseite verbundenen Seitenrahmen umfasst und dass der erste Seitenrahmen und der zweite Seitenrahmen über die Gepäckablage miteinander verbunden sind.

Der erste Seitenrahmen und der zweite Seitenrahmen sind insbesondere jeweils als separater Seitenrahmen ausgebildet. Die Seitenrahmen sind somit im Sinne eines geringen Packmaßes platzsparend anordenbar. Es können dabei mehrere Seitenrahmen für mehrere Gepäckträger platzsparend in einem Packstück transportiert werden. Die Seitenrahmen sind insbesondere ohne eine dazwischen angeordnete Gepäckablage aufeinander stapelbar, die als ein gesondertes Bauteil auch gesondert transportiert werden kann, oder die Gepäckablage wird bei einem gemeinsamen Transport in einem Packstück flach auf oder zwischen den Seitenrahmen liegend in einen Bauteilstapel eingestapelt oder in einen von den Seitenrahmen umgrenzten Hohlraum eingestellt. Die Seitenrahmen und die zugehörige Gepäckablage können dadurch erst am Montageort zu einem fertigen Gepäckträger montiert werden, der auch erst dann ein übliches Raumvolumen eines Gepäckträgers einnimmt.

Der erste und der zweite Seitenrahmen und auch die Gepäckablage können eine Form aufweisen, in der sie flach aufeinanderliegend stapelbar sind. Dabei können die Seitenrahmen so geformt sein, dass sie paarig aufeinanderliegend stapelbar sind, und/oder sie werden in einem ersten Stapel des ersten Seitenrahmens und in einem zweiten Stapel des zweiten Seitenrahmens gestapelt, um im Stapel liegend transportiert zu werden. Für die Herstellung eines Gepäckträgers werden dann die ersten und zweiten Seitenrahmen sowie gegebenenfalls auch die Gepäckablage dem jeweiligen Stapel entnommen.

Zur Vereinfachung des Transports und zum besseren Schutz des ersten und zweiten Seitenrahmens können diese in einem Transportgestell gestapelt werden, in dem die ersten und/oder zweiten Seitenrahmen formschlüssig gehalten sind. Das Transportgestell schützt die darin eingestapelten Seitenrahmen gegen Beschädigungen während des Transports und gegen Relativbewegungen der Seitenrahmen gegeneinander, durch die diese ebenfalls während des Transports beschädigt werden könnten.

Zur einfachen Montage der Gepäckablage an dem Fahrzeug sind die Seitenrahmen insbesondere lasttragend ausgebildet. Der erste Seitenrahmen und der zweite Seitenrahmen tragen bevorzugt das Gewicht der Gepäckablage.

Dabei kann ein Seitenrahmen als eine Struktur mit mehreren biegesteif miteinander verbundenen Rahmenprofilen ausgebildet sein. Die Seitenrahmen können dabei jeweils aus separaten, fest miteinander verbundenen Rahmenprofilen, wie etwa als Schweiß-, Löt-, Steck-, Klemm-, Schraub- und/oder Klebekonstruktion mit Bauteilen aus einem metallischen Drahtmaterial, einem Kunststoffmaterial, insbesondere faserverstärkt, und/oder aus einem passend umgeformten Rohrmaterial und/oder aus einem oder mehreren Gussteilen, beispielsweise aus einem Aluminium-Druckguss, und/oder einstückig, etwa aus einem gemeinsamen, die jeweiligen Rahmenprofile ausbildenden Halbzeug, beispielsweise einem Blech oder einem anderen der vorstehend genannten als einstückiges Bauteil ausgebildeten Bauteile, hergestellt sein. Eine geschlossene Kontur bilden die Seitenrahmen nicht zwingend aus.

Die Seitenrahmen können jeweils als sich in einer flächigen Ebene erstreckende Raumkörper ausgebildet sein. Die flächige Ausbildung meint dabei, dass sich die Seitenrahmen jeweils zumindest im Wesentlichen in einer Ebene erstrecken. Die flächige Ebene, in der sich ein jeweiliger Seitenrahmen bei einem fertig montierten Gepäckträger erstreckt, verläuft bevorzugt zwischen einem oder mehreren Montagepunkten eines jeweiligen Seitenrahmens mit einem Anbindungsbauteil an einem Fahrzeugrahmen, an den der Gepäckträger anzubauen ist, und einer Anbindungszone, in der der Seitenrahmen mit der Gepäckablage verbunden ist. Dadurch ergibt sich eine schlanke, gleichwohl hoch belastbare Bauweise, mit der hohe Traglasten des Gepäckträgers in den Fahrzeugrahmen übertragen werden können. Die Traglast, mit der der Gepäckträger beim Gebrauch belastet wird, kann durch diese Gestaltung insbesondere in einer genau oder zumindest annähernd genau vertikalen Richtung nach unten ohne eine zusätzliche Kraftumlenkung quer zur Vertikalen abgetragen werden. Mit der Erstreckung zumindest im Wesentlichen in einer Ebene ist eine Erstreckung des Seitenrahmens in eine Richtung seiner minimalen Erstreckung gemeint, die bevorzugt nicht um einen Faktor von 3, besonders bevorzugt nicht um einen Faktor von 2, weiter besonders bevorzugt nicht um einen Faktor von 1,5, über eine minimale Erstreckung eines genau in einer Ebene liegenden Seitenrahmens in diese Richtung hinausgeht. Bei der Erstreckung des Seitenrahmens sind im Sinne dieser Anmeldung etwaige zur Aufnahme von Zubehör, weiterem Gepäck oder Ähnlichem an den Seitenrahmen angeordnete Teile der Seitenrahmen, wie beispielsweise Seitentaschenaufhängemittel, ausgeschlossen. Die Seitenrahmen können somit platzsparend angeordnet werden.

Zur einfachen Herstellung und Montage können die Seitenrahmen insbesondere zueinander spiegelsymmetrisch ausgebildet sein. Die Seitenrahmen sind insbesondere zu einer Spiegelebene, die in am Fahrzeug montierter Stellung des Gepäckträgers bevorzugt in einer Vertikalmittelebene des Fahrzeugs liegt, spiegelsymmetrisch ausgebildet.

Die erste Gepäckablagenseite zeigt insbesondere in eine erste Richtung entlang einer Längserstreckung des Gepäckträgers, wobei die Längserstreckung im Sinne dieser Anmeldung die in am Fahrzeug montierter Stellung des Gepäckträgers in eine Fahrtrichtung des Fahrzeuges zeigende Erstreckung meint, oder entlang einer Quererstreckung des Gepäckträgers, wobei die Quererstreckung im Sinne dieser Anmeldung die in am Fahrzeug montierter Stellung des Gepäckträgers in eine horizontale Querrichtung des Fahrzeuges zeigende Erstreckung meint. Die zweite Gepäckablagenseite zeigt insbesondere in eine zweite, der ersten Richtung entgegengesetzte Richtung. Somit ist eine Verbindung der Gepäckablage mit den Seitenrahmen auf einfache Weise möglich. Zudem ist eine flächige Ausgestaltung der Seitenrahmen begünstigt.

Die jeweils lösbare Verbindung der Seitenrahmen mit der Gepäckablage meint, dass die Seitenrahmen nach einem Verbinden mit der Gepäckablage wieder beschädigungsfrei von der Gepäckablage gelöst werden können. Die Verbindung kann so ausgestaltet sein, dass Verbindungshilfsmittel verwendet werden, um die Verbindung herzustellen, wie beispielsweise Schrauben, Nieten, Stifte, Klemmstücke und dergleichen. Die Verbindung kann auch so ausgestaltet sein, dass die Verbindung unter Zuhilfenahme von Werkzeugen oder werkzeuglos herstellbar und/oder lösbar ist. Die Seitenrahmen sind über die Gepäckablage insbesondere derart miteinander verbunden, dass die Seitenrahmen ohne unmittelbaren Kontakt miteinander verbunden sind.

In einer vorteilhaften Ausgestaltung der Erfindung ist die Gepäckablage zwischen dem ersten Seitenrahmen und dem zweiten Seitenrahmen angeordnet. Insbesondere ist die Gepäckablage derart zwischen dem ersten Seitenrahmen und dem zweiten Seitenrahmen angeordnet, dass eine Erstreckung der Gepäckablage in lotrechter Richtung in montiertem Zustand des Gepäckträgers nicht über eine Erstreckung der Seitenrahmen in diese Richtung hinausgeht. Bevorzugt ist eine Sicht auf die Gepäckablage in Richtung der Quererstreckung der Gepäckablage oder in Richtung der Längserstreckung der Gepäckablage durch die Seitenrahmen verdeckt. Die Gepäckablage ist somit auf einfache Weise montierbar und austauschbar. Zudem ist eine derartige Anordnung der Gepäckablage optisch ansprechend.

Die Erstreckung der Gepäckablage in Querrichtung des Gepäckträgers legt vorzugsweise einen variablen Abstand der Seitenrahmen in dieser Richtung fest. Somit ist durch einen Austausch der Gepäckablage durch eine Gepäckablage mit anderer Erstreckung in Querrichtung des Gepäckträgers der Abstand der Seitenrahmen in dieser Richtung veränderbar. Eine Kompatibilität des Gepäckträgers mit verschiedenen Fahrzeugen ist dadurch verbessert.

In einer weiteren vorteilhaften Ausgestaltung der Erfindung umfassen der erste Seitenrahmen und der zweite Seitenrahmen jeweils wenigstens ein die Gepäckablage aufnehmendes Aufnahmeprofil und zumindest ein mit dem Aufnahmeprofil verbundenes, insbesondere einteilig mit dem Aufnahmeprofil ausgebildetes, Stützprofil, wobei das Stützprofil zur Abstützung des Aufnahmeprofils an dem Fahrzeugrahmen von dem Aufnahmeprofil zu einer jeweiligen Fahrzeugrahmenverbindungsstelle des Seitenrahmens hin verlaufend ausgebildet ist.

Die Aufnahmeprofile sind zur einfachen Aufnahme der Gepäckablage jeweils zumindest abschnittsweise parallel zu einer Ladeebene der Gepäckablage angeordnet. Eine Erstreckung des Aufnahmeprofils in Längsrichtung der Gepäckablage ist vorzugsweise größer als die Erstreckung der Gepäckablage in diese Richtung. Somit sind auf einfache Weise unterschiedliche Gepäckablagen, insbesondere Gepäckablagen mit unterschiedlich großer Erstreckung in Längsrichtung und/oder Gepäckablagen mit unterschiedlichem Funktionsumfang, mit dem Aufnahmeprofil aufnehmbar.

Das Stützprofil verläuft insbesondere quer zum Aufnahmeprofil. Quer meint dabei schräg oder senkrecht. Die Abstützung des Aufnahmeprofils ist somit besonders effektiv. Die Abstützung kann vorzugsweise weiter dadurch verbessert sein, dass die Seitenrahmen jeweils mehrere Stützprofile umfassen.

Die Fahrzeugrahmenverbindungsstelle kann zur einfachen Verbindung mit dem Fahrzeug beispielsweise als Ausnehmung, Lasche, Schelle oder Ähnliches ausgebildet sein.

Vorzugsweise liegt eine jeweilige Oberseite der Aufnahmeprofile in einer gemeinsamen Ebene mit der Ladeebene der Gepäckablage. Die Aufnahmeprofile bilden dann gemeinsam mit der Ladeebene der Gepäckablage eine Ladeebene des Gepäckträgers mit aus. Eine Größe der Ladeebene des Gepäckträgers ist somit durch die Aufnahmeprofile relativ zur Ladeebene der Gepäckablage vergrößert. Eine Ladekapazität des Gepäckträgers ist dadurch verbessert.

Bevorzugt ist die Gepäckablage zwischen den Aufnahmeprofilen der Seitenrahmen angeordnet. Insbesondere ist eine Sicht auf die Gepäckablage, betrachtet aus einer senkrecht auf die erste Gepäckablageseite gerichteten ersten Richtung sowie einer senkrecht auf die zweite Gepäckablageseite gerichteten zweiten Richtung, durch die Aufnahmeprofile verdeckt. Somit sind unterschiedliche Gepäckablagen optisch ansprechend zwischen den Aufnahmeprofilen aufnehmbar.

Vorzugsweise ist die Gepäckablage jeweils lösbar mit den Aufnahmeprofilen der Seitenrahmen verbunden. Dadurch ist der Gepäckträger vergleichsweise einfach demontierbar und weist ein geringes Packmaß auf. Zudem ist die Gepäckablage somit auf einfache Weise gegen andere Gepäckablagen, etwa mit anderen Abmessungen und/oder anderem Funktionsumfang, austauschbar.

Mit Vorteil weisen die Aufnahmeprofile der Seitenrahmen zur Verbindung, insbesondere Verschraubung, mit der Gepäckablage jeweils zumindest ein an einer Innenseite der Seitenrahmen angeordnetes, insbesondere als Innengewinde ausgebildetes, Befestigungselement auf. Die Innenseite meint dabei jeweils eine zum anderen Seitenrahmen gerichtete Seite. Die Innenseite ist in am Fahrzeug montierter Stellung des Gepäckträgers zur Vertikalmittelebene des Fahrzeugs gerichtet.

Die Gepäckablage weist bevorzugt zumindest ein mit den Befestigungselementen der Seitenrahmen korrespondierendes Befestigungselement auf. Im Falle von als Innengewinde ausgebildeten Befestigungselementen der Seitenrahmen ist das Befestigungselement der Gepäckablage insbesondere als Ausnehmung ausgebildet. Eine Verbindung von Gepäckablage und Seitenrahmen kann dann beispielsweise mittels Schraubverbindung auf einfache Weise erfolgen.

In einer vorteilhaften Ausgestaltung sind die Befestigungselemente von einer jeweiligen Außenseite des Seitenrahmens nicht einsehbar ausgebildet. Die Außenseite meint eine in am Fahrzeug montierter Stellung des Gepäckträgers von der Vertikalmittelebene des Fahrzeugs weg gerichtete Seite. Die Befestigungselemente sind insbesondere an der jeweiligen Innenseite der Seitenrahmen angeordnet. Der Gepäckträger ist somit optisch ansprechend gestaltet.

In einer weiteren vorteilhaften Ausgestaltung sind die Aufnahmeprofile über zumindest ein sich quer zu einer jeweiligen Längsrichtung der Aufnahmeprofile erstreckendes erstes Verbindungsprofil lösbar miteinander verbunden. Das erste Verbindungsprofil verläuft insbesondere in Richtung der Quererstreckung des Gepäckträgers. Zudem ist das erste Verbindungsprofil vorzugsweise jeweils lösbar mit dem ersten Seitenrahmen und lösbar mit dem zweiten Seitenrahmen verbunden. Ein Abstand und/oder eine Lage der Seitenrahmen zueinander werden somit unabhängig von der Gepäckablage festgelegt. Somit ist eine Austauschbarkeit der Gepäckablage verbessert. Ferner ist das erste Verbindungsprofil im Sinne eines geringen Packmaßes auf einfache Weise von den Seitenrahmen trennbar.

Bevorzugt ist das erste Verbindungsprofil an einem jeweiligen ersten in Längsrichtung der Aufnahmeprofile liegenden Ende der Aufnahmeprofile mit diesen verbunden. Somit ist ein Aufnahmebereich zwischen den Aufnahmeprofilen zur Aufnahme der Gepäckablage vorteilhaft groß.

Mit Vorteil sind die Aufnahmeprofile über zumindest ein sich quer zu einer Längsrichtung der Aufnahmeprofile erstreckendes zweites Verbindungsprofil lösbar miteinander verbunden. Das zweite Verbindungsprofil verläuft insbesondere in Richtung der Quererstreckung des Gepäckträgers. Zudem ist das zweite Verbindungsprofil vorzugsweise jeweils lösbar mit dem ersten Seitenrahmen und lösbar mit dem zweiten Seitenrahmen verbunden. Die Festlegung der Seitenrahmen zueinander ist somit besonders stabil.

Vorzugsweise ist das zweite Verbindungsprofil an einem jeweiligen zweiten in Längsrichtung der Aufnahmeprofile liegenden Ende der Aufnahmeprofile mit diesen verbunden. Das jeweilige zweite in Längsrichtung der Aufnahmeprofile liegende Ende der Aufnahmeprofile ist von dem jeweiligen ersten in Längsrichtung der Aufnahmeprofile liegenden Ende weg gerichtet. Der Aufnahmebereich zur Aufnahme der Gepäckablage zwischen den Aufnahmeprofilen ist somit vorteilhaft groß.

Das erste Verbindungsprofil und/oder das zweite Verbindungsprofil weist bzw. weisen vorzugsweise zumindest ein etwa als Ausnehmung oder Ähnliches ausgebildetes Befestigungselement zur Montage eines Reflektors, einer Leuchte oder Ähnliches auf. Alternativ oder ergänzend ist ein Halteelement zur Aufnahme eines Reflektors, einer Leuchte oder Ähnliches bereits in zumindest einer der Verbindungsprofile integriert. Somit sind daran montierte Gepäckträgerteile einfach zu montieren. Zudem sind derartige Gepäckträgerteile von der Gepäckablage unabhängig festgelegt und somit durch einen Austausch der Gepäckablage nicht betroffen.

In einer bevorzugten Ausgestaltung der Erfindung bilden das Aufnahmeprofil des ersten Seitenrahmens, das Aufnahmeprofil des zweiten Seitenrahmens, das erste Verbindungsprofil und das zweite Verbindungsprofil einen Aufnahmerahmen zur Aufnahme der Gepäckablage aus. In dem Aufnahmerahmen sind vorzugsweise unterschiedliche Gepäckablagen aufnehmbar. Die Gepäckablage ist in am Fahrzeug montierter Stellung des Gepäckträgers insbesondere senkrecht zu einer lotrechten Richtung vollumfänglich durch den Aufnahmerahmen eingerahmt. Die Aufnahme der Gepäckablage ist somit verbessert.

Nach einer Ausgestaltung der Erfindung sind an den Aufnahmeprofilen des ersten und zweiten Seitenrahmens und der Gepäckablage zueinander kongruent ausgeformte Vorsprünge und Ausnehmungen ausgebildet, die in dem Montagezustand der ersten und zweiten Seitenrahmen und der Gepäckablage zu einem Gepäckträger zueinander eine formschlüssige Verbindung bilden. Dabei können die Seitenrahmen wenigstens einen Vorsprung oder wenigstens eine Ausnehmung ausbilden. Die Gepäckablage bildet dann vorzugsweise das korrespondierende andere Verbindungselement, das heißt zumindest eine Ausnehmung im Falle von durch die Seitenrahmen ausgebildeten Vorsprüngen oder wenigstens einen Vorsprung im Falle von durch die Seitenrahmen ausgebildeten Ausnehmungen, aus. Durch die formschlüssige Verbindung der Bauteile zueinander können die genannten Bauteile spielfrei zueinander in ihrer Montageposition zueinander gehalten werden. Die zueinander kongruent ausgeformten Vorsprünge und Ausnehmungen können sich insbesondere quer zu einer Belastungsrichtung des Gepäckträgers erstrecken, um für die Montage des Gepäckträgers verwendete Verbindungshilfsmittel statisch zu entlasten, so dass diese die Bauteile nur in der Montagerichtung aneinander fixieren müssen. Das Risiko von Beschädigungen an den Verbindungshilfsmitteln und den angrenzenden Flächen in den verbundenen Bauteilen wird dadurch verringert. Die Belastbarkeit des Gepäckträgers und dessen Formstabilität unter Lasteinwirkung wird durch diese Maßnahme insgesamt erhöht. Die zueinander kongruent ausgeformten Vorsprünge und Ausnehmungen können so ausgebildet sein, dass sie die miteinander zu verbindenden Bauteile eines Gepäckträgers bei der Montage in einer passenden räumlichen Lage zueinander selbsttätig ausrichten und zentrieren, indem die kongruent zueinander ausgebildeten Oberflächen der Vorsprünge und Ausnehmungen die feste Montage der Bauteile aneinander in nur genau einer passenden räumlichen und spielfreien Ausrichtung und Anlage der Bauteile zueinander zulassen.

Weitere vorteilhafte Ausgestaltungen der Erfindung und Details sind dem nachfolgend beschriebenen, schematisch dargestellten Ausführungsbeispiel zu entnehmen; es zeigen:
- Fig. 1: eine perspektivische Ansicht eines erfindungsgemäßen ersten Gepäckträgers in nicht montiertem Zustand,
- Fig. 2: eine perspektivische Ansicht des Gepäckträgers aus Fig. 1 in teilweise montiertem Zustand,
- Fig. 3: eine Ansicht des Gepäckträgers aus Fig. 2 aus Richtung III in Fig. 2,
- Fig. 4: eine Schnittansicht des Gepäckträgers aus Fig. 3 entlang der Schnittlinie IV-IV aus Fig. 3,
- Fig. 5: eine perspektivische Ansicht eines erfindungsgemäßen zweiten Gepäckträgers in nicht montiertem Zustand
- Fig. 6: eine perspektivische Ansicht des Gepäckträgers aus Fig. 5 in montiertem Zustand.

Nachfolgend werden gleichwirkende Elemente der Erfindung mit einer einheitlichen Bezugsziffer versehen, sofern dies sinnvoll ist. Die nachfolgend beschriebene Merkmalskombination kann auch in weiteren Kombinationen als beschrieben oder dargestellt und unter Weglassung einzelner Merkmale Gegenstand der Erfindung sein.

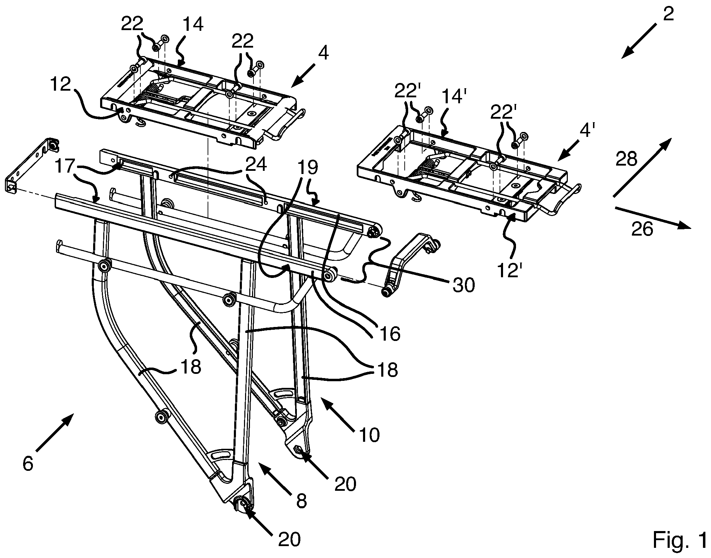

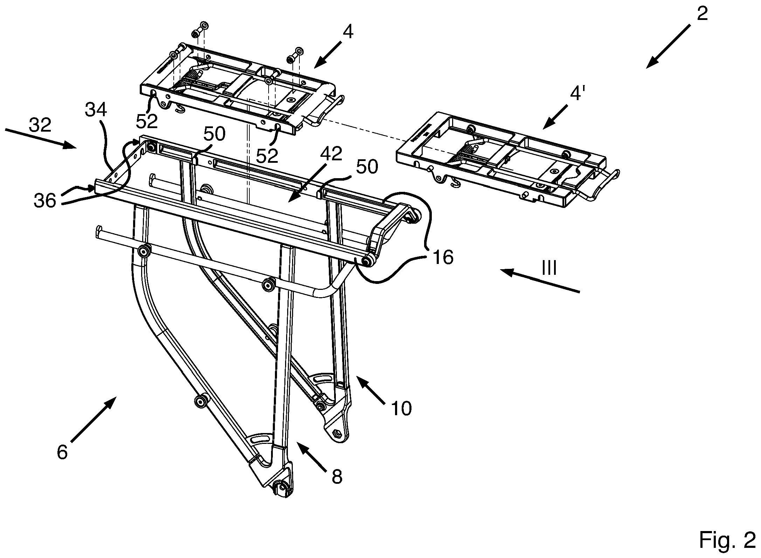

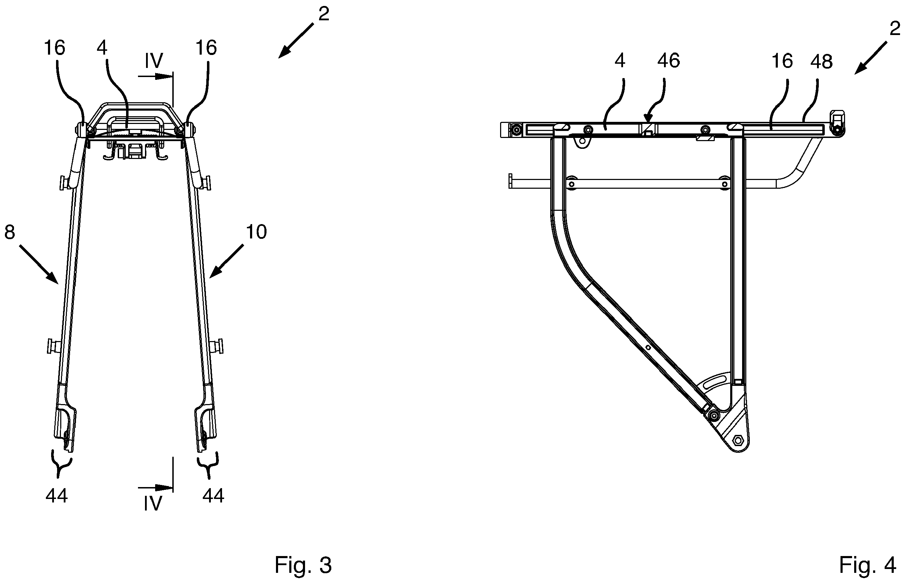

Fig. 1 zeigt ein Ausführungsbeispiel eines erfindungsgemäßen Gepäckträgers 2 mit einer Gepäckablage 4 und mit einem Traggestell 6 zur Verbindung der Gepäckablage 4 mit einem Fahrzeugrahmen (nicht dargestellt). In Fig. 1 und Fig. 2 ist zusätzlich zu der Gepäckablage 4 eine alternative Gepäckablage 4' abgebildet. Gemeinsam mit dem Traggestell 6 bildet entweder die Gepäckablage 4 oder die alternative Gepäckablage 4' den Gepäckträger aus. Das Traggestell 6 umfasst einen ersten Seitenrahmen 8 und einen zweiten Seitenrahmen 10. Der erste Seitenrahmen 8 ist in montiertem Zustand des Gepäckträgers (vgl. Fig. 3 und Fig. 4) lösbar mit einer ersten Gepäckablagenseite 12 verbunden. Der zweite Seitenrahmen 10 ist lösbar mit einer zweiten Gepäckablagenseite 14 verbunden. In montiertem Zustand des Gepäckträgers 2 sind somit der erste Seitenrahmen 8 und der zweite Seitenrahmen 10 über die Gepäckablage 4 miteinander verbunden.

Vorliegend weisen der erste Seitenrahmen 8 und der zweite Seitenrahmen 10 jeweils wenigstens ein die Gepäckablage 4 aufnehmendes Aufnahmeprofil 16 auf. Mit den Aufnahmeprofilen 16 ist zumindest ein, insbesondere einteilig mit diesen ausgebildetes, Stützprofil 18 verbunden. Mit Hilfe der Stützprofile 18 erfolgt eine Abstützung der Aufnahmeprofile 16 an dem Fahrzeugrahmen. Dazu verlaufen die Stützprofile 18 von dem Aufnahmeprofil 16 zu einer jeweiligen Fahrzeugrahmenverbindungsstelle 20 der Seitenrahmen 8, 10. Bei dem vorliegend als Hinterradgepäckträger für ein Fahrrad (nicht dargestellt) ausgebildeten Gepäckträger 2 sind die Fahrzeugrahmenverbindungsstellen 20 jeweils als Ausnehmungen zur Verbindung mit einer Fahrradnabe (nicht dargestellt) ausgebildet. Mit den jeweiligen Aufnahmeprofilen 16 der Seitenrahmen 8, 10 ist die Gepäckablage 4 lösbar mittels Verbindungshilfsmitteln 22 verbunden. Zur optisch ansprechenden Verbindung der Seitenrahmen 8, 10 mit der Gepäckablage 4 weisen die Aufnahmeprofile 16 an ihren Innenseiten 17, die zugleich Innenseiten der Seitenrahmen 8,10 sind, jeweils zumindest ein insbesondere als Innengewinde ausgebildetes Befestigungselement 24 auf. Somit kann die lösbare Verbindung der Seitenrahmen 8, 10 mit der Gepäckablage 4 beispielsweise auf einfache Weise mittels einer Schraubverbindung erfolgen. Durch die Anordnung der Befestigungselemente 24 an der Innenseite 17 der Aufnahmeprofile 16 sind die Befestigungselemente 24 von einer jeweiligen Außenseite 19 der Aufnahmeprofile 16, die zugleich eine jeweilige Außenseite der Seitenrahmen 8, 10 ist, nicht einsehbar. Der Gepäckträger ist somit in seine einzelnen, insbesondere flächig ausgebildeten Bestandteile zerlegbar, wodurch der Gepäckträger 2 ein vergleichsweise geringes Packmaß aufweist.

Zudem ist der abgebildete Gepäckträger flexibel hinsichtlich seiner Eigenschaften, insbesondere hinsichtlich einer Austauschbarkeit der Gepäckablage 4 gegen andere Gepäckablagen, wie beispielsweise die alternative Gepäckablage 4' mit einer vorliegend vergrößerten Erstreckung entlang einer Längsrichtung 26 des Gepäckträgers 2 relativ zu der Gepäckablage 4. Die Gepäckablage 4 könnte ebenso durch eine weitere Gepäckablage 4 mit anderem Funktionsumfang und/oder anderer Erstreckung in der Querrichtung 28 des Gepäckträgers 2 ausgetauscht werden. Durch die Erstreckung der Gepäckablage 4 in Querrichtung 28 des Gepäckträgers 2 kann ein Abstand 30 zwischen dem ersten Seitenrahmen 8 und dem zweiten Seitenrahmen 10 variabel festgelegt werden. Der Gepäckträger 2 ist somit mit unterschiedlichen Fahrzeugen kompatibel.

In Fig. 2 ist der Gepäckträger 2 mit der Gepäckablage 4 und dem Traggestell 6 dargestellt. Der erste Seitenrahmen 8 und der zweite Seitenrahmen 10 des Traggestells 6 sind vorliegend über ein sich quer zu einer jeweiligen Längsrichtung 32 der Aufnahmeprofile 16 erstreckendes erstes Verbindungsprofil 34 lösbar miteinander verbunden. Das erste Verbindungsprofil 34 ist insbesondere an einem ersten in Längsrichtung 32 liegenden Ende 36 der Aufnahmeprofile 16 mit diesen verbunden. Dadurch sind die Seitenrahmen 8, 10 auch bei vom Gepäckträger 2 demontierter Gepäckablage 4 stabil miteinander verbunden. Diese stabile Verbindung ist insbesondere weiter verbessert, indem die Aufnahmeprofile 16 an einem zweiten, in Längsrichtung 32 liegenden, dem ersten Ende 36 entgegengesetzten Ende 40 mit einem zweiten Verbindungsprofil 38 lösbar miteinander verbunden sind. Das Aufnahmeprofil 16 des ersten Seitenrahmens 8, das Aufnahmeprofil 16 des zweiten Seitenrahmens 10, das erste Verbindungsprofil 34 und das zweite Verbindungsprofil 38 bilden somit einen Aufnahmebereich 42 umschließenden Aufnahmerahmens zur sicheren Aufnahme der Gepäckablage 4, insbesondere zur Aufnahme unterschiedlicher Gepäckablagen 4, aus. Die Austauschbarkeit der Gepäckablage 4 ist unter anderem dadurch verbessert, dass an den Aufnahmeprofilen 16, 116 des ersten Seitenrahmens 8 und des zweiten Seitenrahmens 10 sowie der Gepäckablage 4 zueinander kongruent ausgeformte Vorsprünge 50 und Ausnehmungen 52 ausgebildet sind, die in dem Montagezustand (vgl. Fig. 3 und Fig. 4) der Seitenrahmen 8, 10 und der Gepäckablage 4 zu einem Gepäckträger 2 zueinander eine formschlüssige Verbindung bilden. Vorliegend weisen die Seitenrahmen 8, 10 jeweils zumindest einen Vorsprung 50 und die Gepäckablage 4 zumindest eine zu dem Vorsprung 50 korrespondierend ausgebildete Ausnehmung 52 auf.

In Fig. 3 ist ersichtlich, dass die Gepäckablage 4 zwischen dem ersten Seitenrahmen 8 und dem zweien Seitenrahmen 10 angeordnet ist. Insbesondere ist die Gepäckablage 4 zwischen den Aufnahmeprofilen 16 der Seitenrahmen 8, 10 angeordnet und jeweils lösbar mit den Aufnahmeprofilen 16 verbunden. Eine minimale Erstreckung 44 der flächig ausgebildeten Seitenrahmen 8, 10 ist vergleichsweise gering, so dass der Gepäckträger 2 ein vorteilhaft geringes Packmaß aufweist.

In Fig. 4. ist erkennbar, dass die Aufnahmeprofile 16 parallel zu der Gepäckablage 4, insbesondere zu einer Ladeebene 46 der Gepäckablage 4, verlaufen. Vorzugsweise liegt eine jeweilige Oberseite 48 der Aufnahmeprofile 16 in einer gemeinsamen Ebene mit der Ladeebene 46 der Gepäckablage 4. Somit wird die Ladeebene des gesamten Gepäckträgers 2 durch die Ladeebene 46 der Gepäckablage 4 und die Oberseite 48 der Aufnahmeprofile 16 gebildet. Eine Ladekapazität des Gepäckträgers 2 ist somit verbessert.

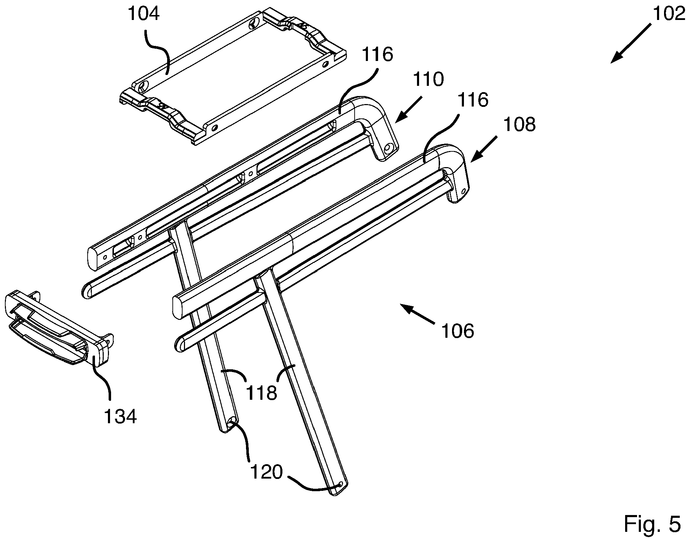

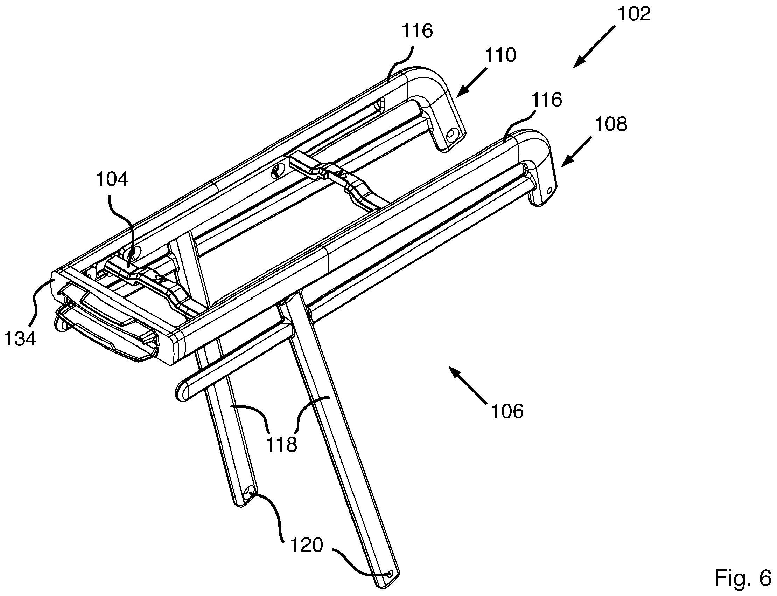

Die Fig. 5 und 6 zeigen eine weitere erfindungsgemäße Ausführungsform eines Gepäckträgers 102 mit einer Gepäckablage 104 und mit einem Traggestell 106. Das Traggestell 106 umfasst einen ersten Seitenrahmen 108 und einen zweiten Seitenrahmen 110. Die Seitenrahmen 108, 110 sind in montiertem Zustand des Gepäckträgers 102 (vgl. Fig. 6) über die Gepäckablage 104 lösbar miteinander verbunden (Verbindungshilfsmittel der lösbaren Verbindung nicht dargestellt). Die Seitenrahmen 108, 110 sind zudem über ein erstes Verbindungsprofil 134 lösbar miteinander verbunden. Zudem umfassen die Seitenrahmen 108, 110 jeweils ein Aufnahmeprofil 116 zur Aufnahme der Gepäckablage 104 sowie ein Stützprofil 118 zur Abstützung der Aufnahmeprofile 116 an einem Fahrzeug (nicht dargestellt). Dazu verlaufen die Stützprofile 118 jeweils zu einer Fahrzeugrahmenverbindungsstelle 120.

Die vorbeschriebenen Ausführungsbeispiele von erfindungsgemäßen Gepäckträgern weisen Vorteile hinsichtlich ihres Packmaßes sowie eine hohe Flexibilität hinsichtlich ihrer Eigenschaften, insbesondere eine verbesserte Kompatibilität mit verschiedenen Fahrzeugen und eine gute Austauschbarkeit der Gepäckablage, auf.

### Bezugsziffernliste

- 2, 102: Gepäckträger
- 4, 4', 104: Gepäckablage
- 6, 106: Traggestell
- 8, 108: erster Seitenrahmen
- 10, 110: zweiter Seitenrahmen
- 12: erste Gepäckablageseite
- 14: zweite Gepäckablageseite
- 16, 116: Aufnahmeprofil
- 17: Innenseite
- 18, 118: Stützprofil
- 19: Außenseite
- 20, 120: Fahrzeugrahmenverbindungsstelle
- 22: Verbindungshilfsmittel
- 24: Befestigungselement
- 26: Längsrichtung Gepäckträger
- 28: Querrichtung
- 30: Abstand
- 32: Längsrichtung Aufnahmeprofil
- 34, 134: erstes Verbindungsprofil
- 36: erstes Ende
- 38: zweites Verbindungsprofil
- 40: zweites Ende
- 42: Aufnahmebereich
- 44: minimale Erstreckung
- 46: Ladeebene Gepäckablage
- 48: Oberseite Aufnahmeprofil
- 50: Vorsprung
- 52: Ausnehmung

## Patentansprüche

1. Gepäckträger (2, 102) mit einer Gepäckablage (4, 4', 104) zur Aufnahme von Gepäck und mit einem Traggestell (6, 106) zur Verbindung der Gepäckablage (4, 4', 104) mit einem Fahrzeugrahmen, **dadurch gekennzeichnet, dass** das Traggestell (6, 106) einen ersten, lösbar mit einer ersten Gepäckablagenseite (12) verbundenen Seitenrahmen (8, 108) und einen zweiten, lösbar mit einer zweiten Gepäckablagenseite (14) verbundenen Seitenrahmen (10, 110) umfasst und dass der erste Seitenrahmen (8, 108) und der zweite Seitenrahmen (10, 110) über die Gepäckablage (4, 4', 104) miteinander verbunden sind.

2. Gepäckträger (2, 102) nach Anspruch 1, **dadurch gekennzeichnet, dass** die Gepäckablage (4, 4', 104) zwischen dem ersten Seitenrahmen (8, 108) und dem zweiten Seitenrahmen (10, 110) angeordnet ist.

3. Gepäckträger (2, 102) nach einem der vorhergehenden Ansprüche, **dadurch gekennzeichnet, dass** der erste Seitenrahmen (8, 108) und der zweite Seitenrahmen (10, 110) jeweils wenigstens ein die Gepäckablage (4, 4', 104) aufnehmendes Aufnahmeprofil (16, 116) und zumindest ein mit dem Aufnahmeprofil (16, 116) verbundenes, insbesondere einteilig mit dem Aufnahmeprofil (16, 116) ausgebildetes, Stützprofil (18, 118) umfassen, wobei das Stützprofil (18, 118) zur Abstützung des Aufnahmeprofils (16, 116) an dem Fahrzeugrahmen von dem Aufnahmeprofil (16, 116) zu einer jeweiligen Fahrzeugrahmenverbindungsstelle (20, 120) des Seitenrahmens (8, 108, 10, 110) hin verlaufend ausgebildet ist.

4. Gepäckträger (2, 102) nach Anspruch 3, **dadurch gekennzeichnet, dass** die Aufnahmeprofile (16, 116) jeweils zumindest abschnittsweise parallel zu einer Ladeebene (46) der Gepäckablage (4, 4', 104) angeordnet sind.

5. Gepäckträger (2, 102) nach Anspruch 3 oder 4, **dadurch gekennzeichnet, dass** eine jeweilige Oberseite (48) der Aufnahmeprofile (16, 116) in einer gemeinsamen Ebene mit der Ladeebene (46) der Gepäckablage (4, 4', 104) liegt.

6. Gepäckträger (2, 102) nach einem der Ansprüche 3 bis 5, **dadurch gekennzeichnet, dass** die Gepäckablage (4, 4', 104) zwischen den Aufnahmeprofilen (16, 116) der Seitenrahmen (8, 108, 10, 110) angeordnet ist.

7. Gepäckträger (2, 102) nach einem der Ansprüche 3 bis 6, **dadurch gekennzeichnet, dass** die Gepäckablage (4, 4', 104) jeweils lösbar mit den Aufnahmeprofilen (16, 116) der Seitenrahmen (8, 108, 10, 110) verbunden ist.

8. Gepäckträger (2, 102) nach einem der Ansprüche 3 bis 7, **dadurch gekennzeichnet, dass** die Aufnahmeprofile (16, 116) der Seitenrahmen (8, 108, 10, 110) zur Verbindung, insbesondere Verschraubung, mit der Gepäckablage (4, 4', 104) jeweils zumindest ein an einer Innenseite (17) der Seitenrahmen (8, 108, 10, 110) angeordnetes, insbesondere als Innengewinde ausgebildetes, Befestigungselement (24) aufweisen.

9. Gepäckträger (2, 102) nach Anspruch 8, **dadurch gekennzeichnet, dass** die Befestigungselemente (24) von einer jeweiligen Außenseite (19) des Seitenrahmens (8, 108, 10, 110) nicht einsehbar ausgebildet sind.

10. Gepäckträger (2, 102) nach einem der Ansprüche 3 bis 9, **dadurch gekennzeichnet, dass** die Aufnahmeprofile (16, 116) über zumindest ein sich quer zu einer jeweiligen Längsrichtung (32) der Aufnahmeprofile (16, 116) erstreckendes erstes Verbindungsprofil (34, 134) lösbar miteinander verbunden sind.

11. Gepäckträger (2, 102) nach Anspruch 10, **dadurch gekennzeichnet, dass** das erste Verbindungsprofil (34, 134) an einem jeweiligen ersten in Längsrichtung (32) der Aufnahmeprofile (16, 116) liegenden Ende (36) der Aufnahmeprofile (16, 116) mit diesen verbunden ist.

12. Gepäckträger (2, 102) nach einem der Ansprüche 3 bis 11, **dadurch gekennzeichnet, dass** die Aufnahmeprofile (16, 116) über zumindest ein sich quer zu einer Längsrichtung (32) der Aufnahmeprofile (16, 116) erstreckendes zweites Verbindungsprofil (38) lösbar miteinander verbunden sind.

13. Gepäckträger (2, 102) nach Anspruch 12, **dadurch gekennzeichnet, dass** das zweite Verbindungsprofil (38) an einem jeweiligen zweiten in Längsrichtung (32) der Aufnahmeprofile (16, 116) liegenden Ende (40) der Aufnahmeprofile (16, 116) mit diesen verbunden ist.

14. Gepäckträger (2, 102) nach einem der Ansprüche 3 bis 13 und unter Einschluss der Ansprüche 10 und 12, **dadurch gekennzeichnet, dass** das Aufnahmeprofil (16, 116) des ersten Seitenrahmens (8, 108), das Aufnahmeprofil (16, 116) des zweiten Seitenrahmens (10, 110), das erste Verbindungsprofil (34, 134) und das zweite Verbindungsprofil (38) einen Aufnahmerahmen zur Aufnahme der Gepäckablage (4, 4', 104) ausbilden.

15. Gepäckträger (2, 102) nach einem der vorhergehenden Ansprüche, **dadurch gekennzeichnet, dass** an den Aufnahmeprofilen (16, 116) des ersten und zweiten Seitenrahmens (8, 10, 108, 110) und der Gepäckablage (4, 4', 104) zueinander kongruent ausgeformte Vorsprünge (50) und Ausnehmungen (52) ausgebildet sind, die in dem Montagezustand der ersten und zweiten Seitenrahmen (8, 10, 108, 110) und der Gepäckablage (4, 4', 104) zu einem Gepäckträger (2, 102) zueinander eine formschlüssige Verbindung bilden.

16. Fahrzeug, insbesondere Fahrrad, mit einem Fahrzeugrahmen, **gekennzeichnet durch** einen Gepäckträger (2, 102) nach einem der Ansprüche 1 bis 15.
